# EUROPÄISCHE PATENTSCHRIFT

(11) **EP 0 405 286 B1**
(45) Veröffentlichungstag und Bekanntmachung des Hinweises auf die Patenterteilung: **05.05.1993**
(21) Anmeldenummer: 90111494.2
(22) Anmeldetag: 19.06.1990
(51) Int. Cl.: B60Q 3/04, G02F 1/1335

(54) **Anzeigeeinrichtung**
Display device
Dispositif d'affichage

(30) Priorität: 29.06.1989 DE 3921304
(43) Veröffentlichungstag der Anmeldung: 02.01.1991
(73) Patentinhaber: Hella KG Hueck & Co., 59552 Lippstadt (DE)
(72) Erfinder: Jost, Franz-Gerhard, D-5760 Arnsberg (DE); Klassen, Eugen, D-4780 Lippstadt (DE)

(56) Entgegenhaltungen:
- EP-A- 2 397 766
- GB-A- 2 061 587
- US-A- 3 674 341

## Beschreibung

Die Erfindung betrifft eine Anzeigeeinrichtung, insbesondere in Kraftfahrzeugen, mit einer transmissiven oder transflektiven Flüssigkristallzelle, mit einer rückwärtigen Beleuchtungseinrichtung für die Flüssigkristallzelle, die mindestens zwei Lichtquellen mit unterschiedlicher Farbabstrahlung und einen Reflektor aufweist, mit einer Streuscheibe und mit einem Filter.

Aus der deutschen Offenlegungsschrift DE-OS 36 27 697 ist eine Anzeigeeinrichtung mit einer Flüssigkristallzelle bekannt, die als eine transmissive Flüssigkristallzelle ausgebildet ist, die eine rückwärtige Beleuchtung aufweist, durch die Teile der Flüssigkristallzelle mit unterschiedlicher Farbgebung beleuchtet werden. Zu diesem Zweck weist die Anzeigeeinrichtung einen Reflektor und mindestens zwei Lichtquellen mit unterschiedlicher Farbabstrahlung auf, die getrennt voneinander einschaltbar sind. Zur Streuung des Lichts ist eine Streuscheibe, die hier als eine Streufolie ausgebildet ist, direkt hinter der Flüssigkristallzelle angeordnet. Zudem ist in dem Strahlengang ein Filter angeordnet, der hier als eine fluoreszierende Scheibe ausgebildet ist, die dazu dient, eine gleichmäßige Grundhelligkeit zu erzeugen und Farbverfälschungen zu vermeiden.

Als nachteilig erweist sich hierbei, daß durch die Ausbildung des Reflektors als Mehrkammerreflektor, das von den Lichtquellen ausgestrahlte Licht zu einem großen Teil nur über Mehrfachreflektion und damit indirekt auf die Flüssigkristallzelle gelangt, wodurch die erreichbare Lichtstärke sehr gering ist und damit der Kontrast der Anzeige nur gering ist und somit Fehler bei dem Ablesen auftreten können. Dieser Nachteil ergibt sich insbesondere dann, wenn bei einer transmissiven Flüssigkristallzelle Licht hoher Lichtintensität aus der Beobachtungsrichtung der Flüssigkristallzelle einfällt, so daß die Sicherheit z. B. bei dem Betrieb eines Kraftfahrzeugs, bei der die Anzeigeeinrichtung zur Übermittlung sicherheitsrelevanter Parameter dient, herabgesetzt wird und gefährliche Situationen heraufgerufen werden können. Weiterhin erweist sich als nachteilig, daß durch die Anordnung der farbiges Licht abstrahlenden Lichtquellen, je nachdem welche Lichtquelle eingeschaltet ist, eine unterschiedliche Ausleuchtung mit unterschiedlichen Lichtstärken und mit einer unterschiedlichen Gleichmäßigkeit erreicht wird. Weiterhin erweist sich als nachteilig, daß für eine gleichmäßige Ausleuchtung der Flüssigkristallzelle mit einer ausreichend hohen Lichtstärke, Lichtquellen mit hohen Nennleistungen erforderlich sind, die zu einer starken Aufheizung der Anzeigeeinrichtung und insbesondere bei der Verwendung in Kraftfahrzeugen zu einem hohen Leistungsverbrauch führen, der die Vorteile der Verwendung einer Flüssigkristallzelle als Anzeigeeinrichtung aufhebt.

Aus dem deutschen Gebrauchsmuster G 86 34 222 ist eine Anzeigeeinrichtung mit einer Flüssigkristallzelle bekannt, die als eine transflektive Flüssigkristallzelle ausgebildet ist. Die Anzeigeeinrichtung verfügt über eine Beleuchtungseinrichtung zur rückwärtigen Beleuchtung der Flüssigkristallzelle, die einen Reflektor und Lichtquellen unterschiedlicher Farbabstrahlung aufweist, die getrennt voneinander einschaltbar sind. Zur Streuung des Lichts ist direkt hinter der Flüssigkristallzelle eine Streuscheibe angeordnet, die als eine Streufolie ausgebildet ist. In dem Strahlengang zwischen dem Reflektor und/oder den Lichtquellen und der Flüssigkristallzelle ist zudem ein Filter angeordnet, der als ein Farbfilter ausgebildet ist, durch den eine vorgegebene Farbtönung der Flüssigkristallzelle erreicht wird. Zudem ist bei dieser Ausführung in dem Strahlengang ein Transflektor angeordnet, der sowohl für das von den Lichtquellen oder dem Reflektor kommende Licht als auch für Licht, das aus der Beobachtungsrichtung auf den Transflektor auftrifft, teilreflektiv ist. Hierbei erweist sich als nachteilig, daß nur ein geringer Anteil des Lichts, das von den Lichtquellen ausgestrahlt wird, zur Ausleuchtung der Flüssigkristallzelle genutzt werden kann, da nur mehrfach reflektiertes Licht zu der Flüssigkristallzelle gelangt, wodurch die Lichtstärke nur durch die Verwendung von Lichtquellen hoher Nennleistung zur kontrastreichen Ausleuchtung der Flüssigkristallzelle ausreicht, was zu einer starken Erwärmung der Anzeigeeinrichtung und zu einem hohen Energieverbrauch führt. Bei der Verwendung von Lichtquellen, mit üblicher Nennleistung ergibt sich, insbesondere bei der Verwendung der Anzeigeeinrichtung zur Anzeige sicherheitsrelevanter Parameter in Kraftfahrzeugen, der Nachteil, daß gerade bei dem häufig auftretenden Fall, daß das von außen einfallende Licht nur eine mittlere Lichtstärke aufweist, die durch die Beleuchtungseinrichtung erreichbare Lichtstärke nicht ausreicht, um eine kontrastreiche Anzeige von Symbolen oder Buchstaben sicherzustellen, wodurch es zu gefährlichen Situationen bei dem Betrieb eines Kraftfahrzeugs kommen kann. Durch die nebeneinanderliegende Anordnung der Lichtquellen ergibt sich hier insbesondere der Nachteil, daß je nach eingeschalteter Lichtquelle die Flüssigkristallzelle in den Bereichen, die der eingeschalteten Lichtquelle näher liegen, stärker ausgeleuchtet wird als in Bereichen, die von der Lichtquelle weiter entfernt sind, wodurch je nach eingeschalteter Lichtquelle ein ungünstiger, verschieden gleichmäßiger Ausleuchtungseffekt der Flüssigkristallzelle erreicht wird.

Aus der britischen Patentanmeldung GB 20 61 587 ist eine Anzeigeeinrichtung bekannt, die eine transmissive Flüssigkristallzelle mit einer rückwärtigen Beleuchtungseinrichtung aufweist, die aus reflektierenden Mitteln und Lichtquellen mit unterschiedlicher Farbabstrahlung besteht. Der in üblicher Weise mit Polarisationsfiltern versehenen Flüssigkristallzelle ist eine Streuscheibe zugeordnet, die eine gleichmäßige Ausleuchtung der Flüssigkristallzelle bewirkt. Die Lichtquellen mit unterschiedlicher Farbabstrahlung sind getrennt einschaltbar. Um eine geringe Bautiefe der Beleuchtungseinrichtung zu gewährleisten, bestehen die reflektierenden Mittel aus ebenen Spiegeln, die in einem vorgegebenen Winkel zu der normalen Beobachtungsrichtung angeordnet sind, der kleiner 45° ist. Das von den Lichtquellen ausgestrahlte Licht wird dabei von den Spiegeln auf die Streuscheibe der Flüssigkristallzelle gelenkt.

Als nachteilig erweist sich auch bei dieser Ausführung, daß je nach eingeschalteter Lichtquelle die Flüssigkristallzelle, in denen der Lichtquelle näher liegenden Bereichen stärker ausgeleuchtet wird, als in den Bereichen, die von der Lichtquelle weiter entfernt sind. Zudem erweist sich als nachteilig, daß ein großer Teil des von den Lichtquellen ausgestrahlten Lichts nicht zur Ausleuchtung der Flüssigkristallzelle verwendet werden kann, da ein umfassender Reflektor nicht vorgesehen ist. Damit ergibt sich insgesamt der Nachteil, daß bei dem Auftreffen von Licht aus der Beobachtungsrichtung, das eine hohe Lichtstärke aufweist, eine kontrastreiche Anzeige von Zeichen und Symbolen durch die Flüssigkristallzelle nicht gewährleistet ist, was insbesondere bei der Verwendung in Kraftfahrzeugen für die Anzeige von sicherheitsrelevanten Parametern zu gefährlichen Situationen führen kann.

Aus dem deutschen Gebrauchsmuster G 85 10 864 ist eine Anzeigeeinrichtung bekannt, die eine transflektive Flüssigkristallzelle aufweist. Die Beleuchtungseinrichtung für die Flüssigkristallzelle besteht hierbei aus einer Lichtleiteranordnung, wobei die Lichtleiter mit einer Reflektorfolie hinterlegt sind. Zur Einkopplung von Licht unterschiedlicher Farbe sind zwei Einkopplungsstellen vorgesehen. Um eine Streuung des Lichts zu erreichen, ist zudem zwischen der Flüssigkristallzelle und dem Lichtleiter eine Streuscheibe, die hier als eine Streufolie ausgebildet ist, angeordnet.

Da die Einkopplung des farbigen Lichts an zwei Seiten der Flüssigkristallzelle erfolgt, ergibt sich hierbei der Nachteil, daß die erreichbare Lichtstärke zur Beleuchtung der Flüssigkristallzelle sich je nach eingeschalteter Lichtquelle über den gesamten Bereich der Flüssigkristallzelle unterscheidet, wodurch sich Ungleichmäßigkeiten in der Ausleuchtung und auch in der Farbgebung ergeben.

Der Erfindung liegt die Aufgabe zugrunde, eine Anzeigeeinrichtung zu schaffen, bei der eine transmissive oder transflektive Flüssigkristallzelle durch Licht unterschiedlicher Farbe, unabhängig von der eingeschalteten Lichtquelle, bei einer möglichst platzsparenden, einfachen und kostengünstigen Herstellbarkeit und Ausführung der Anzeigeeinrichtung möglichst gleichmäßig, mit einer hohen Lichtstärke bei einer hohen Farbreinheit und einem möglichst guten Kontrast rückwärtig beleuchtet wird.

Diese Aufgabe wird erfindungsgemäß dadurch gelöst, daß jede Lichtquelle auf der der Flüssigkristallzelle zugewandten Seite des Reflektors in der Öffnung je eines Facettenreflektors angeordnet ist und daß die Facetten des Facettenreflektors derart angeordnet sind, daß jede Facette die gesamte Flüssigkristallzelle beleuchtet.

Es ist von Vorteil, daß jede der Lichtquelle auf der der Flüssigkristallzelle zugewandten Seite des Reflektors in der Öffnung je eines Facettenreflektors angeordnet ist, weil somit eine optimale Ausnutzung des von der Lichtquelle ausgestrahlten Lichts erreicht wird.

In diesem Zusammenhang ist es besonders vorteilhaft, daß die Facetten des Facettenreflektors derart angeordnet sind, daß jede Facette die gesamte Flüssigkristallzelle beleuchtet, wodurch zum einen erreicht wird, daß ein möglichst großer Anteil des von der Lichtquelle abgestrahlten Lichts direkt auf die Flüssigkristallzelle gelenkt wird, wodurch eine hohe Lichtstärke erreicht wird und zum anderen erreicht wird, daß die Flüssigkristallzelle unabhängig von der eingeschalteten Lichtquelle möglichst gleichmäßig und mit einer hohen Farbreinheit ausgeleuchtet wird, was gewährleistet, daß auch bei einem Auftreffen von Licht aus der Beobachtungsrichtung mit einer hohen Lichtstärke eine kontrastreiche, fehlerfrei erkennbare, farbliche Darstellung von Symbolen und Zeichen gewährleistet ist, was insbesondere bei der Verwendung der Anzeigeeinrichtung zur Anzeige sicherheitsrelevanter Parameter, die Sicherheit bei dem Betrieb von Kraftfahrzeugen erhöht. Durch die Ausbildung der Facettenreflektoren wird dabei insbesondere eine einfache und kostengünstige und zugleich platzsparende Anzeigeeinrichtung geschaffen, so daß der Reflektor keine große Tiefe aufweisen muß, um zu gewährleisten, daß die Flüssigkristallzelle gleichmäßig und mit einer hohen Lichtstärke ausgeleuchtet wird.

Weitere vorteilhafte Ausgestaltungen und Weiterbildungen des Erfindungsgegenstands ergeben sich aus den Unteransprüchen.

Es ist vorteilhaft, daß die Symmetrieachse jedes Facettenreflektors auf den Mittelpunkt der Flüssigkristallzelle gerichtet ist, weil somit eine einfache und kostengünstige Ausführung und Herstellbarkeit der Facettenreflektoren gewährleistet ist.

Es ist vorteilhaft, daß jeder Facettenreflektor mit seinem der Flüssigkristallzelle zugewandten äußeren Rand in der Ebene je einer Teilfläche des Reflektors angeordnet ist und daß jede Teilfläche derart angeordnet ist, daß die Symmetrieachse jedes Facettenreflektors auf den Mittelpunkt der Flüssigkristallzelle gerichtet ist, weil somit zum einen eine einfache und kostengünstige Herstellbarkeit des Reflektors gewährleistet ist und nur ein geringer konstruktiver Aufwand erforderlich ist und zum anderen erreicht wird, daß die Anteile des von den Lichtquellen abgestrahlten Lichts, die nicht durch die Facettenreflektoren auf die Flüssigkristallzelle gelenkt werden, durch die Teilflächen auf die Flüssigkristallzelle gelenkt werden, wodurch die Ausnutzung des von den Lichtquellen ausgestrahlten Lichts weiter erhöht wird und zudem auch indirekte Strahlung der Flüssigkristallzelle zugeführt wird, wodurch die Gleichmäßigkeit der Ausleuchtung weiter erhöht wird.

Dadurch, daß die Facetten und die Teilflächen eine hochreflektierende Beschichtung aufweisen, ergibt sich der Vorteil einer besonders guten Ausnutzung des zur Verfügung stehenden Lichts, wodurch die Nennleistung der Lichtquellen gering gehalten werden kann, was zum einen zu Energieeinsparungen und zum anderen zu nur einer geringen Erwärmung der Anzeigeeinrichtung führt.

In diesem Zusammenhang ist es besonders vorteilhaft, daß die Seitenwände des Reflektors reflektierend beschichtet sind, weil somit die Lichtausnutzung nochmals erhöht wird.

Dadurch, daß jede Lichtquelle von je einem haubenförmigen oder kalottenförmigen Farbfilter umgeben ist, ergibt sich der Vorteil, daß das von den Lichtquellen ausgestrahlte Licht eine einheitliche, intensive Farbgebung aufweist.

Es ist von Vorteil, daß die Flüssigkristallzelle über Kontaktelemente mit einer elektronische Bauelemente tragenden Leiterplatte verbunden ist, die über ein Verbindungselement und Abstandhalter fest mit dem Reflektor verbunden ist und daß zwischen der Leiterplatte und der Flüssigkristallzelle über Halteelemente die Streuscheibe und der Filter angeordnet sind, weil auf diese Weise eine einfache und kostengünstige Montierbarkeit und Ausführung der Anzeigeeinrichtung gewährleistet wird, für eventuelle Wartungsarbeiten eine leichte Zugänglichkeit sichergestellt wird und insbesondere erreicht wird, daß alle Bauteile der Anzeigeeinrichtung eine feste unverrückbare Lage zueinander einnehmen und insbesondere die Kontaktierung der Flüssigkristallzelle zu der Leiterplatte eine hohe Sicherheit aufweist.

Dadurch, daß die Flüssigkristallzelle mit einem Winkel zu der Mittelachse des Reflektors angeordnet ist, ergibt sich der Vorteil, daß aus der Beobachtungsrichtung gesehen, ein möglichst hoher Kontrast bei der Anzeige von Zeichen und Symbolen erreicht wird.

Es ist von Vorteil, daß die Flüssigkristallzelle eine Punktmatrix-Flüssigkristallzelle ist, weil somit beliebige Zeichen und Symbole mit unterschiedlicher Farbgebung und hoher Gleichmäßigkeit der Lichtverteilung angezeigt werden können.

Dadurch, daß der Reflektor einstückig aus Kunststoff gefertigt ist, ergibt sich der Vorteil einer besonders einfachen und kostengünstigen Herstellbarkeit der Anzeigeeinrichtung.

Es ist von Vorteil, daß jeder Facettenreflektor eine vorgegebene Anzahl Facetten aufweist und daß die Facetten zu der Symmetrieachse einen vorgegebenen Winkel aufweisen, wodurch eine möglichst gute Anpassung der von den Facetten beleuchteten Fläche an die Größe der Flüssigkristallzelle erreicht wird.

Dadurch, daß die der Flüssigkristallzelle zugewandte Seite der Streuscheibe teilreflektiv ausgebildet ist, ergibt sich der Vorteil, daß insbesondere bei dem Auftreffen von Licht hoher Lichtstärke aus der Beobachtungsrichtung, der Kontrast bei der Anzeige von Zeichen und Symbolen erhöht wird, wodurch insbesondere bei der Verwendung der Anzeigeeinrichtung für die Anzeige sicherheitsrelevanter Parameter in Kraftfahrzeugen, die Sicherheit bei dem Betrieb des Kraftfahrzeugs erhöht wird.

Ein Ausführungsbeispiel der Erfindung ist in den Zeichnungen dargestellt und wird im folgenden anhand der Zeichnungen näher beschrieben.

Es zeigen
Figur 1 eine erfindungsgemäße Anzeigeeinrichtung in Vorderansicht,
Figur 2 eine erfindungsgemäße Anzeigeeinrichtung in Seitenansicht,
Figur 3 eine Einzelheit (Z) in vergrößertem Maßstab entsprechend Figur 2,
Figur 4 eine Draufsicht auf den Reflektor der erfindungsgemäßen Anzeigeeinrichtung in Schnittdarstellung,
Figur 5 eine Vorderansicht des Reflektors der erfindungsgemäßen Anzeigeeinrichtung,
Figur 6 ein Ausführungsbeispiel eines Facettenreflektors.

Gleiche oder gleichwirkende Bauteile und Merkmale sind in allen Figuren mit gleichen Bezugszeichen versehen.

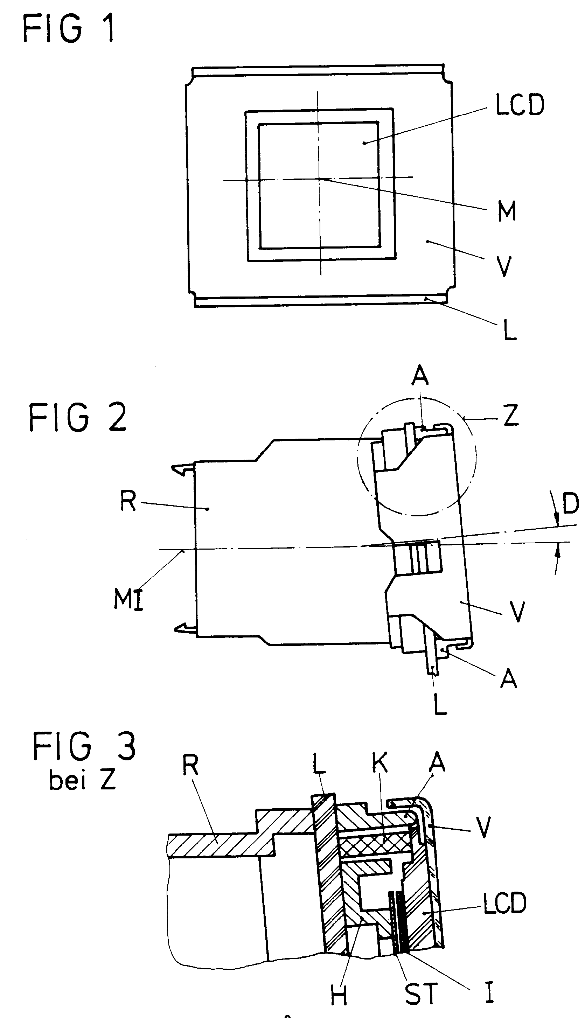

In Figur 1 ist ein Ausführungsbeispiel einer erfindungsgemäßen Anzeigeeinrichtung in Vorderansicht dargestellt. Ein Verbindungselement (V) dient hier dazu, die Flüssigkristallzelle (LCD) mit einer Leiterplatte (L) und einem aus dieser Perspektive nicht erkennbaren Reflektor (R) fest zu verbinden und sicher zu kontaktieren. Die Flüssigkristallzelle (LCD) ist hier beispielhaft als eine transmissive Flüssigkristallzelle ausgebildet, die eine rückwärtige Beleuchtungseinrichtung aufweist. Die Flüssigkristallzelle (LCD) ist dabei in bekannter Weise aus einer Glaszelle aufgebaut, die mit einer nematischen Flüssigkeit gefüllt ist, die durchsichtige Elektroden aufweist, die von einer hier nicht gezeigten Ansteuerelektronik angesteuert werden und die in der Regel über vor und hinter der Flüssigkristallzelle (LCD) angeordnete Polarisationsfilter verfügt, die bei transmissiven Flüssigkristallzellen (LCD) häufig in gekreuzter Ausführung angeordnet sind. Bei einem anderen Ausführungsbeispiel kann die verwendete Flüssigkristallzelle (LCD) auch eine transflektive Flüssigkristallzelle (LCD) sein, die dann über einen Transflektor verfügt, der hier nicht gezeigt ist und der aus der Beobachtungsrichtung hinter der Flüssigkristallzelle (LCD) angeordnet ist.

In Figur 2 ist eine Seitenansicht der erfindungsgemäßen Anzeigeeinrichtung dargestellt. Der Reflektor (R), der hier, um eine kostengünstige und einfache Herstellbarkeit zu gewährleisten, einstückig aus Kunststoff gefertigt ist, ist beispielhaft als ein kastenförmiges Bauteil ausgeführt. Wie schon unter Figur 1 beschrieben, stellt ein Verbindungselement (V) sicher, daß die Flüssigkristallzelle (LCD) zum einen sicher mit der Leiterplatte (L) kontaktiert wird und zum anderen fest und unverrückbar mit dem Reflektor (R) verbunden ist. Zur Einhaltung eines vorgegebenen Abstands werden dabei hier beispielhaft Abstandshalter (A) eingesetzt. Um einen möglichst hohen Kontrast bei der Anzeige von Zeichen und Symbolen durch die Flüssigkristallzelle (LCD) zu erreichen, ist die Flüssigkristallzelle (LCD) bei diesem Ausführungsbeispiel zusammen mit dem Verbindungselement (V) und der Leiterplatte (L) mit einem Winkel (D) zu der Mittelachse (MI) des Reflektors (R) angeordnet.

Figur 3 zeigt die in Figur 2 gekennzeichnete Einzelheit Z in einer detaillierten Schnittdarstellung. Der Reflektor (R) liegt dabei mit seinem der Flüssigkristallzelle (LCD) zugewandten Rand fest an der Leiterplatte (L) an. Das Verbindungselement (V), das ebenso wie die Leiterplatte (L) einen Ausschnitt für die Flüssigkristallzelle (LCD) aufweist, liegt dabei fest auf der FLüssigkristallzelle (LCD) auf und drückt diese gegen Kontaktelemente (K), die mit Leiterbahnen auf der Leiterplatte (L) verbunden sind.

Abstandhalter (A) sorgen dabei dafür, daß ein minimaler Abstand des Verbindungselements (V) zu der Leiterplatte (L) eingehalten wird, wodurch ein sicherer Sitz der Flüssigkristallzelle (LCD) zu der Leiterplatte (L) und dem Reflektor (R) eingehalten wird. Durch Halteelemente (H) wird eine Streuscheibe (ST), die hier als eine Streufolie ausgebildet ist, und die Gleichmäßigkeit der Ausleuchtung der Flüssigkristallzelle (LCD) erhöht und ein Filter (I), der hier als ein Farbfilter ausgebildet ist, der der Farbkorrektur dient und vermeidet, daß ungewünschte Farbeffekte an den Konturen der dargestellten Zeichen und Symbolen auftreten, in einer vorgegebenen Position zu der Flüssigkristallzelle (LCD) gehalten.

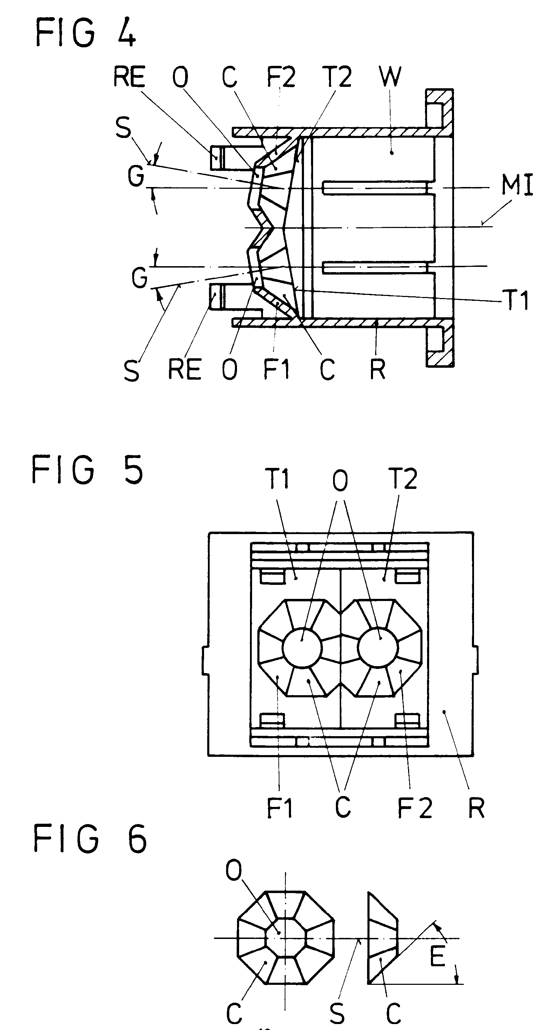

In Figur 4 ist eine Draufsicht des Reflektors (R) der erfindungsgemäßen Anzeigeeinrichtung als Schnitt dargestellt. Der Reflektor (R) ist hier kostengünstig einstückig ausgebildet. Der Reflektor (R) verfügt beispielhaft auf seiner der Flüssigkristallzelle (LCD) zugewandten Seite über zwei Facettenreflektoren (F1, F2), wobei jeder Facettenreflektor (F1, F2) je eine Öffnung (O) zur Aufnahme einer Lichtquelle aufweist. Die in dieser Darstellung nicht gezeigten Lichtquellen, die z. B. Glühlampen oder Leuchtdioden sein können, weisen eine unterschiedliche Farbabstrahlung auf. Diese Farbabstrahlung kann dadurch erreicht werden, daß die Lichtquelle selbst farblich gefärbt ist oder aber, daß die Lichtquelle von einem haubenförmigen oder kalottenförmigen Farbfilter umgeben ist. Jeder Facettenreflektor (F1, F2) weist eine vorgegebene Anzahl Facetten (C) auf, die derart angeordnet sind, daß jede Facette (C) die Flüssigkristallzelle (LCD), die hier nicht dargestellt ist, gleichmäßig beleuchtet. Um eine kostengünstige und einfache Konstruktion und Herstellbarkeit zu gewährleisten, sind die Facettenreflektoren (F1, F2) derart angeordnet, daß die Symmetrieachse (S) jedes Facettenreflektors (F1, F2) auf den Mittelpunkt (M) der Flüssigkristallzelle (LCD), der in Figur 1 angegeben ist, gerichtet ist. Bei dem hier gezeigten Ausführungsbeispiel wird dies dadurch erreicht, daß jeder Facettenreflektor (F1, F2) um einen durch die Abmessungen der Flüssigkristallzelle (LCD) und des Reflektors (R) vorgegebenen Kippwinkel (G) zu der Mittelachse (MI) angewinkelt ist, wodurch unabhängig von der gerade eingeschalteten Lichtquelle eine gleichmäßige Beleuchtung der Flüssigkristallzelle (LCD) erreicht wird.

In die öffnungen (O) der Facettenreflektoren (F1, F2) können dabei übliche Fassungen für Glühbirnen oder Leuchtdioden eingesetzt werden. Um eine rückwärtige Befestigung des Reflektors (R) zu gewährleisten, verfügt der Reflektor (R) über Rastelemente (RE). Bei einem anderen Ausführungsbeispiel kann der Reflektor (R) auch über eine größere Anzahl Facettenreflektoren (F1, F2) verfügen. Zur Erzeugung unterschiedlicher Farbdarstellungen können dabei jeweils einzelne Lichtquellen einzeln eingeschaltet werden oder aber auch verschiedene Lichtquellen in Kombination eingeschaltet werden. Die Einschaltung der Lichtquellen, wird dabei von einer hier nicht gezeigten Ansteuerelektronik übernommen.

In Figur 5 ist eine Vorderansicht des Reflektors (R) des Ausführungsbeispiels dargestellt. Wie schon in Figur 4 dargestellt, weist die der Flüssigkristallzelle (LCD) gegenüberliegende Seite des Reflektors (R) zwei Facettenreflektoren (F1, F2) auf, in deren Öffnungen (O) jeweils eine Lichtquelle, die hier nicht gezeigt ist, über eine Fassung angebracht werden kann. Um eine einfache und kostengünstigere Herstellbarkeit und eine einfache Konstruktion zu ermöglichen, ist der der Flüssigkristallzelle (LCD) zugewandte äußere Rand jedes Facettenreflektors (F1, F2) in der Ebene je einer Teilfläche (T1, T2) angeordnet. Diese Teilflächen (T1, T2) sind auch in der Figur 4 gekennzeichnet. Dabei ist jede Teilfläche (T1, T2), um eine einfache Konstruktion und Herstellbarkeit und eine hohe Lichtausbeute zu erreichen, derart angeordnet, daß die Symmetrieachse (S) jedes Facettenreflektors (F1, F2) auf den Mittelpunkt (M) der Flüssigkristallzelle (LCD) gerichtet ist, der in Figur 1 bezeichnet ist. Die Facettenreflektoren (F1, F2) und die Teilflächen (T1, T2) sind dabei hochreflektierend beschichtet. Um eine weitere Steigerung der Lichtausbeute zu erreichen und eine gleichmäßigere Beleuchtung der Flüssigkristallzelle (LCD) zu gewährleisten sind auch die innenliegenden Seitenflächen (W) des Reflektors (R) reflektierend beschichtet. Bei einem abweichenden Ausführungsbeispiel kann das für den Reflektor (R) verwendete Material schon für sich ausreichende reflektierende Eigenschaften aufweisen.

Das durch die Teilflächen (T1, T2) und die Wände (W) auf die Flüssigkristallzelle (LCD) gelenkte Licht besteht zu einem großen Teil aus indirekter Strahlung, die mehrfach reflektiert ist und somit zu einer diffusen Ausleuchtung der Flüssigkristallzelle (LCD) führt. Da bei einem Auftreffen von Licht starker Lichtstärke aus der Beobachtungsrichtung eine solche rückwärtige Beleuchtung der Flüssigkristallzelle (LCD) nicht ausreichen würde, um Zahlen und Symbole mit einem ausreichenden Kontrast darzustellen, insbesondere dann, wenn die Anzeigeeinrichtung für die Anzeige von sicherheitsrelevanten Parametern in Kraftfahrzeugen verwendet wird, die für die Sicherheit bei dem Betrieb des Kraftfahrzeugs entscheidend sind, sind die Facetten (C) der Facettenreflektoren (F1, F2) derart ausgebildet, daß jede Facette für sich das auf sie von der Lichtquelle auftreffende Licht derart auf die Flüssigkristallzelle (LCD) lenkt, daß die gesamte Flüssigkristallzelle (LCD) beleuchtet wird, wodurch erreicht wird, daß bei dem Einschalten einer beliebigen Lichtquelle die Flüssigkristallzelle (LCD) mit gleicher Intensität und Gleichmäßigkeit jedoch in Abhängigkeit von der eingeschalteten Lichtquelle mit unterschiedlicher Farbe beleuchtet wird, wobei auch bei der Verwendung von Lichtquellen mit geringer Nennleistung eine genügend hohe Lichtstärke für eine optimale Ausleuchtung der Flüssigkristallzelle (LCD) erreicht wird.

Ist es erforderlich, daß die Flüssigkristallzelle (LCD) mit mehr als zwei Farben beleuchtet wird, so kann der Reflektor (R) an seiner der Flüssigkristallzelle (LCD) zugewandten Seite über mehr als zwei Teilflächen (T1, T2, ...) verfügen, wobei die weiteren Teilflächen (T1, T2, ...) jeweils einen Facettenreflektor (F1, F2, ...) mit je einer Lichtquelle unterschiedlicher Farbabstrahlung aufweisen.

In Figur 6 ist ein Ausführungsbeispiel eines Facettenreflektors (F1, F2, ...) in zwei Darstellungen gezeigt. Der Facettenreflektor (F1, F2, ...) weist hier beispielhaft, wie auch schon aus den Figuren 4 und 5 entnehmbar, acht Facetten (C) und eine Öffnung (O) zur Aufnahme der Lichtquelle auf. Die Dimensionierung der Facettenreflektoren (F1, F2, ...) ist dabei durch die Größe der Teilflächen (T1, T2, ...), den Abstand der Lichtquellen zu der Flüssigkristallzelle (LCD) und durch die Größe der Flüssigkristallzelle (LCD) bestimmt. Bei einer vorgegebenen Größe der Öffnung (O) kann durch Variation des Winkels (E) die Größe der zu beleuchtenden Fläche in einem vorgegebenen Abstand bestimmt werden. Bei dem hier gezeigten Ausführungsbeispiel beträgt der Winkel (E) beispielhaft etwa 45°. Je nach dem für die Anzeigeeinrichtung zur Verfügung stehenden Platz wird durch die hier gezeigte Ausführungsform und Variation dieser Ausführungsform die Möglichkeit eröffnet, einen Reflektor (R) zur Verfügung zu stellen, der eine möglichst geringe Bautiefe aufweist und somit besonders platzsparend ist, so daß er z. B. bei einer Montage in einer Anzeigetafel eines Kraftfahrzeugs problemlos eingebaut werden kann. Der Winkel (E) gibt den Winkel der Facettenfläche zu der Symmetrieachse (S) an.

## Patentansprüche

1. Anzeigeeinrichtung, insbesondere für Kraftfahrzeuge, mit einer transmissiven oder transflektiven Flüssigkristallzelle, mit einer rückwärtigen Beleuchtungseinrichtung für die Flüssigkristallzelle, die mindestens zwei Lichtquellen mit unterschiedlicher Farbabstrahlung und einen Reflektor aufweist, mit einer Streuscheibe und mit einem Filter, dadurch gekennzeichnet, daß jede Lichtquelle auf der der Flüssigkristallzelle (LCD) zugewandten Seite des Reflektors (R) in der Öffnung (O) je eines Facettenreflektors (F1, F2, ...) angeordnet ist und daß die Facetten (C) des Facettenreflektors (F1, F2, ...) derart angeordnet sind, daß jede Facette (C) die gesamte Flüssigkristallzelle (LCD) beleuchtet.

2. Anzeigeeinrichtung nach Anspruch 1, dadurch gekennzeichnet, daß die Symmetrieachse (S) jedes Facettenreflektors (F1, F2, ...) auf den Mittelpunkt (M) der Flüssigkristallzelle (LCD) gerichtet ist.

3. Anzeigeeinrichtung nach Anspruch 2, dadurch gekennzeichnet, daß jeder Facettenreflektor (F1, F2, ...) mit seinem der Flüssigkristallzelle (LCD) zugewandten äußeren Rand in der Ebene je einer Teilfläche (T1, T2, ...) des Reflektors (R) angeordnet ist und daß jede Teilfläche (T1, T2, ...) derart angeordnet ist, daß die Symmetrieachse (S) jedes Facettenreflektors (F1, F2, ...) auf den Mittelpunkt (M) der Flüssigkristallzelle (LCD) gerichtet ist.

4. Anzeigeeinrichtung nach Anspruch 3, dadurch gekennzeichnet, daß die Facetten (C) und die Teilflächen (T1, T2, ...) eine hochreflektierende Beschichtung aufweisen.

5. Anzeigeeinrichtung nach Anspruch 4, dadurch gekennzeichnet, daß die Seitenwände (W) des Reflektors (R) reflektierend beschichtet sind.

6. Anzeigeeinrichtung nach Anspruch 5, dadurch gekennzeichnet, daß jede Lichtquelle von je einem haubenförmigen oder kalottenförmigen Farbfilter umgeben ist.

7. Anzeigeeinrichtung nach Anspruch 6, dadurch gekennzeichnet, daß die Flüssigkristallzelle (LCD) über Kontaktelemente (K) mit einer elektronische Bauelemente tragenden Leiterplatte (L) verbunden ist, die über ein Verbindungselement (V) und Abstandhalter (A) fest mit dem Reflektor (R) verbunden ist und daß zwischen der Leiterplatte (L) und der Flüssigkristallzelle (LCD) über Halteelemente (H) die Streuscheibe (ST) und der Filter (I) angeordnet sind.

8. Anzeigeeinrichtung nach Anspruch 7, dadurch gekennzeichnet, daß die Flüssigkristallzelle (LCD) mit einem Winkel (D) zu der Mittelachse (MI) des Reflektors (R) angeordnet ist.

9. Anzeigeeinrichtung nach einem der vorstehenden Ansprüche, dadurch gekennzeichnet, daß die Flüssigkristallzelle (LCD) eine Punktmatrix-Flüssigkristallzelle ist.

10. Anzeigeeinrichtung nach einem der vorstehenden Ansprüche, dadurch gekennzeichnet, daß der Reflektor (R) einstückig aus Kunststoff gefertigt ist.

11. Anzeigeeinrichtung nach einem der vorstehenden Ansprüche, dadurch gekennzeichnet, daß jeder Facettenreflektor (F1, F2, ...) eine vorgegebene Anzahl Facetten (C) aufweist, und daß die Facetten (C) zu der Symmetrieachse (S) einen vorgegebenen Winkel (E) aufweisen.

12. Anzeigeeinrichtung nach einem der vorstehenden Ansprüche, dadurch gekennzeichnet, daß die der Flüssigkristallzelle (LCD) zugewandte Seite der Streuscheibe (ST) teilreflektiv ausgebildet ist.

## Claims

1. Indicating device, particularly for motor vehicles, comprising a transmissive or transflective liquid-crystal cell, a rear illuminating device for the liquid-crystal cell having at least two light sources radiating different colours and a reflector, further comprising a diffusing panel and a filter, characterised in that each light source on the side of the reflector (R) nearest the liquid-crystal cell (LCD) is arranged in the opening (O) of a respective facet reflector (F1, F2, ...) and that the facets (C) of the facet reflector (F1, F2, ...) are so arranged that each facet (C) illuminates the entire liquid-crystal cell (LCD).

2. Indicating device according to claim 1, characterised in that the axis of symmetry (S) of each facet reflector (F1, F2, ...) is directed at the centre (M) of the liquid-crystal cell (LCD).

3. Indicating device according to claim 2, characterised in that each facet reflector (F1, F2, ...) is arranged with its outer edge nearest the liquid-crystal cell (LCD) in the plane of a respective sub-surface (T1, T2, ...) of the reflector (R) and that each sub-surface (T1, T2, ...) is so arranged that the axis of symmetry (S) of each facet reflector (F1, F2, ...) is directed at the centre (M) of the liquid-crystal cell (LCD).

4. Indicating device according to claim 3, characterised in that the facets (C) and the sub-surfaces (T1, T2, ...) have a highly reflective coating.

5. Indicating device according to claim 4, characterised in that the side walls (W) of the reflector (R) are reflectively coated.

6. Indicating device according to claim 5, characterised in that each light source is enclosed by a respective cap-shaped or dome-shaped colour filter.

7. Indicating device according to claim 6, characterised in that the liquid-crystal cell (LCD) is joined by contact elements (K) to a printed board (L) carrying electronic components, said printed board (L) being permanently joined by a connecting element (V) and spacer (A) to the reflector (R), and in that the diffusing panel (ST) and the filter (I) are arranged between the printed board (L) and the liquid-crystal cell (LCD) by means of retaining elements (H).

8. Indicating device according to claim 7, characterised in that the liquid-crystal cell (LCD) is arranged at an angle (D) to the centre axis (MI) of the reflector (R).

9. Indicating device according to one of the preceding claims, characterised in that the liquid-crystal cell (LCD) is a dot-matrix liquid-crystal cell.

10. Indicating device according to one of the preceding claims, characterised in that the reflector (R) is made in one piece from plastic.

11. Indicating device according to one of the preceding claims, characterised in that each facet reflector (F1, F2, ...) has a given number of facets (C) and that the facets (C) are at a given angle (E) to the axis of symmetry (S).

12. Indicating device according to one of the preceding claims, characterised in that the side of the diffusing panel (ST) nearest the liquid-crystal cell (LCD) is partially reflective.

## Revendications

1. Dispositif d'affichage, en particulier pour véhicules à moteur, comportant une cellule à cristaux liquides opérant par transmission ou par transmission-réflexion, comportant aussi, pour la cellule à cristaux liquides, un dispositif d'éclairage arrière qui présente au moins deux sources de lumière avec un rayonnement de couleur différente et un réflecteur, comportant aussi un panneau diffusant et un filtre, dispositif caractérisé par le fait que chaque source de lumière est disposée, du côté du réflecteur (R) orienté vers la cellule à cristaux liquides (LCD), dans l'ouverture (O) de, chaque fois, un réflecteur à facettes (F1, F2, ...) et que les facettes (C) du réflecteur à facettes (F1, F2, ...) sont disposées de façon que chaque facette (C) éclaire la totalité de la cellule à cristaux liquides (LCD).

2. Dispositif d'affichage selon la revendication 1, caractérisé par le fait que l'axe de symétrie (S) de chaque réflecteur à facettes (F1, F2, ...) est orienté sur le centre (M) de la cellule à cristaux liquides (LCD).

3. Dispositif d'affichage selon la revendication 2, caractérisé par le fait que chaque réflecteur à facettes (F1, F2, ...) est disposé, par son bord extérieur orienté vers la cellule à cristaux liquides (LCD), dans le plan de chaque fois une surface partielle (T1, T2, ...) du réflecteur (R) et que chaque surface partielle (T1, T2, ...) est disposée de façon que l'axe de symétrie (S) de chaque réflecteur à facettes (F1, F2, ...) soit orienté sur le centre (M) de la cellule à cristaux liquides (LCD).

4. Dispositif d'affichage selon la revendication 3, caractérisé par le fait que les facettes (C) et les surfaces partielles (T1, T2, ...) présentent un revêtement fortement réfléchissant.

5. Dispositif d'affichage selon la revendication 4, caractérisé par le fait que les parois latérales (W) du réflecteur (R) sont revêtues de façon à réfléchir.

6. Dispositif d'affichage selon la revendication 5, caractérisé par le fait que chaque source de lumière est entourée de, chaque fois, un filtre coloré en forme de dôme ou de calotte.

7. Dispositif d'affichage selon la revendication 6, caractérisé par le fait que la cellule à cristaux liquides (LCD) est reliée, par l'intermédiaire d'éléments de contact (K), avec une carte du circuit imprimé (R) qui porte des composants électroniques et qui, par l'intermédiaire d'un élément de liaison (V) et d'un écarteur (A), est solidairement reliée avec le réflecteur (R), et qu'entre la carte de circuit imprimé (R) et la cellule à cristaux liquides (LCD), sont disposés, au moyen d'éléments de maintien (H), le panneau diffusant (ST) et le filtre (I).

8. Dispositif d'affichage selon la revendication 7, caractérisé par le fait que la cellule à cristaux liquides (LCD) est disposée sous un angle (D) par rapport à l'axe médian (MI) du réflecteur (R).

9. Dispositif d'affichage selon l'une des revendications précédentes, caractérisé par le fait que la cellule à cristaux liquides (LCD) est une cellule à cristaux liquides à matrice de points.

10. Dispositif d'affichage selon l'une des revendications précédentes, caractérisé par le fait que le réflecteur (R) est fabriqué d'une pièce en plastique.

11. Dispositif d'affichage selon l'une des revendications précédentes, caractérisé par le fait que chaque réflecteur à facettes (F1, F2, ...) présente un nombre de facettes (C) prescrit et que les facettes (C) présentent un angle prescrit (E) par rapport à l'axe de symétrie (S).

12. Dispositif selon l'une des revendications précédentes, caractérisé par le fait que la face, orientée vers la cellule à cristaux liquides (LCD), du panneau diffusant (ST) est conçue partiellement réfléchissant
